# EUROPÄISCHE PATENTSCHRIFT

(11) **EP 4 022 655 B1**
(45) Veröffentlichungstag und Bekanntmachung des Hinweises auf die Patenterteilung: **29.05.2024**
(21) Anmeldenummer: 20789047.6
(22) Anmeldetag: 06.10.2020
(51) Int. Cl.: H01F 7/128, H01F 27/02

(54) **BETÄTIGUNGSVORRICHTUNG**
ACTUATING DEVICE
DISPOSITIF D'ACTIONNEMENT

(30) Priorität: 09.10.2019 DE 102019006999
(43) Veröffentlichungstag der Anmeldung: 06.07.2022
(73) Patentinhaber: Hydac Fluidtechnik GmbH, 66280 Sulzbach/Saar (DE)
(72) Erfinder: FUCHS, Patrik, 66459 Kirkel (DE); SPINA, Maurizio, 66131 Saarbrücken (DE)
(74) Vertreter: Bartels und Partner, Patentanwälte
(86) Internationale Anmeldenummer: PCT/EP2020/077996
(87) Internationale Veröffentlichungsnummer: WO 2021/069439

(56) Entgegenhaltungen:
- DE-A1-102007 036 310
- DE-A1-102008 030 453
- DE-A1-102017 110 849
- DE-U- 1 972 124

## Beschreibung

Die Erfindung betrifft eine Betätigungsvorrichtung mit den Merkmalen im Oberbegriff von Anspruch 1.

Betätigungsvorrichtungen regelmäßig in Form sogenannter Betätigungsmagnete sind in einer Vielzahl von verschiedenen Bauformen (DE 10 2004 051 332 A1) bekannt. Solche Vorrichtungen werden regelmäßig zum Ansteuern von Fluidventilen eingesetzt und sind in bekannter Weise mit einem Magnetantrieb mit bestrombarer Magnetspule ausgestattet.

Während des Betriebes erwärmt sich die Spule respektive der Magnetantrieb, wobei die Wärme als Verlustleistung an die Umgebung abgegeben wird und wärmebedingt verringert sich das Leistungsvermögen der Betätigungsvorrichtung. Sofern für den Aufbau der Betätigungsvorrichtung metallische Werkstoffe zum Einsatz kommen, verfügen diese regelmäßig über sehr hohe Wärmeleitkoeffizienten, so dass die entstehende Wärme rasch an die Umgebung abgegeben wird, was die Verlustleistung reduzieren hilft. Neben der Tatsache, dass der Einsatz von metallischen Werkstoffen und deren Formgebung kostenintensiv ist, ist deren Einsatz im Rahmen der stromleitenden und stromführenden Komponenten wie der Stromzufuhr bzw. der Magnetspule mit ihren Spulenwicklungen wegen fehlender Isolierung nicht möglich.

Demgemäß wurde im Stand der Technik (DE 10 2014 008 612 B4) für Betätigungsvorrichtungen der genannten Art schon der vermehrte Einsatz von Kunststoffmaterialien vorgeschlagen, zwecks elektrischem Isolieren der stromführenden Komponenten und kostengünstigem Herstellen eines notwendigen Gehäuses für den Magnetantrieb; allein ist die Wärmeleitfähigkeit durch den Einsatz der genannten Kunststoffmaterialien reduziert, so dass sich insbesondere für Magnetantriebe mit hohem Leistungsumfang bei gleichzeitig kleiner Baugröße der dahingehende Aufbau verbietet.

Die DE 10 2008 030 453 A1 beschreibt eine Betätigungsvorrichtung mit den Merkmalen im Oberbegriff von Anspruch 1, bestehend aus mindestens einem Magnetantrieb mit Magnetspule, die in einem Gehäuse aufgenommen im Betrieb eine die Leistung der Vorrichtung beeinträchtigende Wärme erzeugt, die über das Gehäuse zumindest teilweise in die Umgebung als Verlustleistung abgeführt wird, wobei für eine verbesserte Wärmeabfuhr Teile der Vorrichtung aus mindestens einem speziellen Kunststoffmaterial bestehen, das einen Wärmeleitkoeffizienten zwischen 0,25 und 1,25 W/m/K aufweist.

Weitere Betätigungsvorrichtungen gehen aus der DE 10 2017 110 849 A1, der DE 1 972 124 U und der DE 10 2007 036 310 A1 hervor.

Demgemäß stellt sich die Erfindung der Aufgabe, in möglichst kostengünstiger Weise, auch im Rahmen kleiner Baugrößen, eine leistungsfähige Betätigungsvorrichtung zur Verfügung zu stellen.

Eine dahingehende Aufgabe löst eine Betätigungsvorrichtung mit den Merkmalen des Patentanspruches 1.

Gemäß dem kennzeichnenden Teil des Patentanspruches 1 ist vorgesehen, dass ein Aufnahmetopf eines Gehäuseteils des Gehäuses von seiner freien Stirnseite her zumindest die Magnetspule und nachfolgend eine Polplatte aufnimmt, die sich gegen ein Abschlussstück abstützt, das mittels einer Bördelung im Gehäuseteil mit einer vorgebbaren Vorspannung gehalten ist. Dergestalt werden über die Bördelung mit einem vorgebbaren Anpressdruck respektive einer Vorspannung die im Gehäuseteil aufgenommenen Bauteile im genannten Umfang aneinandergehalten, was den Wärmeübergang erleichtert.

Ferner ist vorgesehen, dass für eine verbesserte Wärmeabfuhr Teile der Vorrichtung aus mindestens einem speziellen Kunststoffmaterial bestehen, das einen Wärmeleitkoeffizienten zwischen 0,25 und 1,25 W/m/K aufweist.

Durch den Einsatz des speziellen Kunststoffmaterials mit dem angegebenen niedrigen Wärmeleitkoeffizienten ist zum einen die elektrische Isolierung der stromführenden Komponenten des Magnetantriebes nebst der Magnetspule und zum anderen eine hohe Wärmeabgabemenge, vergleichbar metallischen Werkstoffen, an die Umgebung erreicht, was einer unerwünschten Erhitzung durch Verbleib der entstehenden Wärmemenge in der Vorrichtung während ihres Betriebes entgegenwirkt und insoweit das Leistungsvermögen verbessert.

Insbesondere bei Betätigungsvorrichtungen respektive Betätigungsmagneten, die bei entsprechend kleiner Baugröße hohe Betätigungs- oder Schaltkräfte aufbringen müssen und/oder als schnellschaltende Systeme mit einer hohen Anzahl von Lastwechseln konzipiert sind, spielt für die Funktionsfähigkeit eine rasche Wärmeabgabe großer Wärmemengen an die Umgebung eine große Rolle.

Es hat sich gezeigt, dass die Magnetspule mit der bestrombaren Spulenwicklung im Betrieb die Hauptwärmequelle darstellt, so dass in vorteilhafter Weise diese in einer Umhausung aufgenommen ist, die zumindest teilweise, vorzugsweise jedoch vollständig, das jeweilige spezielle Kunststoffmaterial aufweist. Praktische Versuche mit der erfindungsgemäßen Lösung haben ergeben, dass zwar der Kern der Magnetspule nach wie vor im Betrieb stark erwärmt wird, dass die entstehenden Wärmemengen aber über das jeweils spezielle Kunststoffmaterial rasch aus dem Kern der Magnetspule herausgeführt werden, was zu deutlich verbesserten Leistungsergebnissen führt gegenüber den bekannten Lösungen, die überwiegend aus Metallwerkstoffen und/oder den üblichen Kunststoffmaterialien aufgebaut sind.

Bei einer besonders bevorzugten Ausführungsform der erfindungsgemäßen Betätigungsvorrichtung ist vorgesehen, dass die Umhausung für die Spulenwicklung der Magnetspule aus einer Wicklungsaufnahme als ihrem einen Teil und einem die Wicklungsaufnahme abschließenden Deckelteil als ihrem weiteren Teil besteht, und dass beide Teile aus dem gleichen speziellen Kunststoffmaterial aufgebaut sind. Dergestalt entsteht ausgehend von dem Inneren der Magnetspule nach außen hin ein schichtförmiger Abbau der Temperatur, mehr oder minder hin zu allen Seiten von Wicklungsaufnahme mit Deckelteil mit demselben Gradienten, wobei es weiter vorteilhaft für den Temperaturabbau ist, wenn Wicklungsaufnahme und Deckelteil im Wesentlichen über dieselben Wandstärken verfügen.

Für einen verbesserten Wärmeabfluss hat es sich darüber hinaus als vorteilhaft erwiesen, an die Wicklungsaufnahme der Umhausung in Richtung des Magnetantriebes eine Umfassungshülse desselben und an das Deckelteil der Umhausung in Richtung der Umgebung das äußere Gehäuseteil des Vorrichtungsgehäuses anschließen zu lassen, wobei zwischen der Innenwand dieses äußeren Gehäuseteils und der Außenwand des Deckelteils ein umlaufender Ringspalt aufgenommen ist. Es liegt noch im Rahmen der Erfindung, bei Sonderanwendungen für die Betätigungsvorrichtung den dahingehenden Ringspalt mit einem Kühlmedium zu versehen, das auch aus einem Kühlkreislauf stammen kann.

Vorzugsweise ist hier der Ringspalt an seinen freien, einander gegenüberliegenden Enden einmal von der Polplatte und einmal von dem äußeren Gehäuseteil begrenzt, zwischen denen sich die Wicklungsaufnahme für die Spulenwicklung, konzentrisch zum Ringspalt angeordnet, erstreckt. Sowohl die Polplatte als auch das äußere Gehäuseteil ist vorzugsweise aus einem metallischen Werkstoff mit guter Wärmeleitfähigkeit ausgebildet. Für eine gute Wärmeabfuhr dient auch die bevorzugte Ausgestaltung, dass der Magnetantrieb einen Magnetanker aufweist, der längsverfahrbar entlang einer Lagerstelle geführt ist, die stationär innerhalb der Umfassungshülse aufgenommen ist, die die Polplatte zusammen mit dem Magnetanker an einer Durchtrittstelle derselben durchgreift. Über die Lagerstelle für den Magnetanker ist zwischen diesem und der Umfassungshülse wiederum ein den Magnetanker umfassender Hohlraum gebildet, der insoweit frei von Material gehalten die angestrebte verbesserte Wärmeabfuhr nach innen hin mit unterstützt.

Hierfür dient auch, dass als weiterer Bestandteil des Magnetantriebs ein Polkern vorgesehen ist, der von einem Betätigungselement durchgriffen ist, das entlang einer weiteren stationär im Polkern angeordneten Lagerstelle geführt ist. Auch dergestalt ergibt sich über die weitere Lagerstelle zwischen dem Betätigungselement regelmäßig in Form einer Betätigungsstange für den Ventilkolben eines anzuschließenden Fluidventils und dem Polkern ein Hohlraum, der die Wärmeabfuhr aus dem Spulensystem in Richtung seines Zentrums erleichtert. Für Wärmeströme in Richtung des Polkerns ist dabei von Vorteil, dass das freie Ende der Umfassungshülse in der Höhe des Polkerns ausmündet, an dem die Wicklungsaufnahme für die Spulenwicklung mit ihrem einen freien Ende, an das äußere Gehäuseteil anstoßend, abschließt. Besonders vorteilhaft ist es, wenn die Polplatte, der Polkern, die Umfassungshülse sowie das äußere Gehäuseteil aus Metall-Werkstoffen mit guter Wärmeleitfähigkeit bestehen. Neben Edelstahlmaterial für die Umfassungshülse bieten sich für die sonstigen genannten Bauteile Automatenstähle (11SMn30) an, die sich gut verarbeiten, insbesondere in ihre gewünschte Form bringen, lassen.

Bei einer bevorzugten Ausführungsform der erfindungsgemäßen Betätigungsvorrichtung ist vorgesehen, dass ein Boden des Aufnahmetopfes einen Durchgriffsraum für einen Durchgriff des Polkerns aufweist und dass der Boden des Gehäuseteils vorzugsweise stärker ausgebildet ist als die anschließende zylindrische Gehäusewandung des Gehäuseteils. Dies erlaubt eine besonders einfache Montage der Betätigungsvorrichtung, bei der die relevanten Komponenten von der freien Stirnseite her in das topfartige Gehäuseteil, das insoweit eine Art Aufnahmeraum ausbildet, einstapelbar sind.

Bei einer weiteren bevorzugten Ausführungsform der erfindungsgemäßen Betätigungsvorrichtung ist vorgesehen, dass sich die Magnetspule mit ihrer Umhausung außenumfangsseitig am Gehäuseteil, innenumfangsseitig zumindest teilweise am Polkern und mit ihren beiden einander gegenüberliegenden Stirnseiten zum einen am Boden des Gehäuseteils und zum anderen an der Polplatte abstützt. Auch hierdurch wird der Wärmeübergang zwischen den vorstehend genannten Baukomponenten erleichtert und eine gute Wärmeabfuhr erreicht, was auch für den Fall gilt, dass zwischen innenliegenden Teilen der Umhausung und den benachbart gegenüberliegenden Bereichen des Außenumfanges des Polkerns eine druckstabile Umfassungshülse verläuft, die vorzugsweise gleichfalls mit guter Wärmeleitfähigkeit ausgestattet ist.

Bei einer weiter bevorzugten Ausführungsform ist vorgesehen, dass das Gehäuseteil die umfangsseitig geschlossene Gehäusewandung ausbildet, zu deren Längsachse in konzentrischer Anordnung zueinander zumindest die Magnetspule nebst der Polplatte und dem Polkern angeordnet sind. Durch die konzentrische Anordnung wesentlicher Baukomponenten in der Betätigungsvorrichtung ist ein platzsparender Aufbau nebst guter Wärmeübertragung zwischen den Komponenten erreicht.

Bei einer weiteren, besonders bevorzugten Ausführungsform der erfindungsgemäßen Betätigungsvorrichtung ist vorgesehen, dass sowohl der Boden des Gehäuseteils als auch der Polkern, vorzugsweise bündig an ihren einander benachbarten Stirnseiten miteinander abschließend, in direkter Anlage am Ventilkörper sind, der bevorzugt aus einem Werkstoff mit einem hohen Wärmeleitkoeffizienten, wie Aluminium, gebildet ist. Der blockartig ausgebildete Ventilkörper bildet insoweit ein Wärmereservoir aus, so dass die im Betrieb der Betätigungsvorrichtung entstehende Wärme aufgrund der bündigen Direktanlage in den als Wärmespeicher dienenden Wärmekörper abgegeben werden kann. Insoweit ist der Ventilkörper Bestandteil der Betätigungsvorrichtung als Ganzes.

Das jeweils spezielle Kunststoffmaterial besteht aus einem, vorzugsweise spritzgiessbarem, Polyamid 6-Werkstoff, der bevorzugt mit 10 % Glasfaseranteil verstärkt ist und der auf dem Markt unter den Markennamen Radiflam^{®} oder Zytel^{®} zu beziehen ist.

Vorzugsweise ist dabei vorgesehen, dass das jeweils spezielle Kunststoffmaterial flammhemmend ist, insbesondere mit flammhemmenden Additiven versehen ist, wie Magnesiumhydroxid und/oder Carbon. Insbesondere bei Hochtemperaturbeanspruchungen lässt sich dergestalt die Betätigungsvorrichtung mit einer Art Feuerlöscher ausstatten, der im Versagensfall einen Spulenbrand vermeiden hilft.

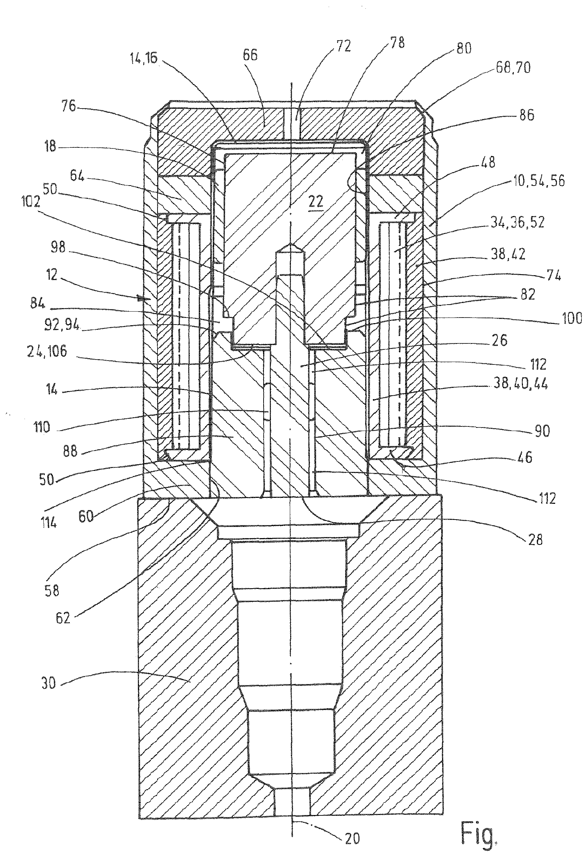

Im Folgenden ist die erfindungsgemäße Betätigungsvorrichtung anhand eines Ausführungsbeispiels nach der Zeichnung näher erläutert. Dabei zeigt in prinzipieller und nicht maßstäblicher Darstellung die einzige Figur einen Längsschnitt durch die Betätigungsvorrichtung mit Teilen eines in üblicher Weise angeschlossenen Ventilgehäuses ohne die bewegbaren Ventilteile und ohne die Fluidanschlüsse.

Die Figur zeigt eine erfindungsgemäße Betätigungsvorrichtung mit einem in einem Gehäuse 10 der Vorrichtung aufgenommenen Magnetantrieb 12, der eine ein Polrohr bildende Umfassungshülse 14 aufweist. Die Umfassungshülse 14 ist im Wesentlichen zylindrisch und an ihrem einen Ende unter Ausbildung eines Bodens 16 geschlossen ausgebildet. Innerhalb der Umfassungshülse 14 ist konzentrisch und stationär eine Lagerstelle 18 aufgenommen, entlang der längsverfahrbar in Richtung der Längsachse 20 der Betätigungsvorrichtung ein Magnetanker 22 als Teil des Magnetantriebes 12 geführt ist.

An seiner dem Boden 16 der Umfassungshülse 14 abgewandten Seite 24 ist an dem Magnetanker 22 ein koaxial zum Magnetanker 22 ausgerichtetes Betätigungselement 26 festgelegt. Das dem Magnetanker 22 abgewandte freie Ende 28 des Betätigungselements 26 dient dem Betätigen von in der Figur nicht dargestellten bewegbaren Ventilteilen eines Ventilgehäuses 30, mit dem die Betätigungsvorrichtung verbunden ist. Insoweit sind in der Figur nur im Groben die Gehäuseumrisse gezeigt. Der dahingehende Ventilaufbau ist üblich und daher nicht näher dargestellt oder beschrieben.

Zum Bewegen des Magnetankers 22 innerhalb der Umfassungshülse 14 weist der Magnetantrieb 12 eine Magnetspule 34 auf, die eine bestrombare Spulenwicklung 36 hat. Die Spulenwicklung 36 ist in einer Umhausung 38 aufgenommen, die eine Wicklungsaufnahme 40 und ein die Wicklungsaufnahme 40 abschließendes Deckelteil 42 aufweist. Die Wicklungsaufnahme 40 weist einen zylindrischen Boden 44 und an den beiden Enden des Bodens 44 jeweils eine sich senkrecht radial nach außen von dem Boden 44 weg erstreckende, ringscheibenförmige Wand 46, 48 auf. Die beiden ringscheibenförmigen Wände 46, 48, die parallel zueinander ausgerichtet sind, bilden zusammen mit dem Boden 44 der Wicklungsaufnahme 40 eine Art Wanne zur Aufnahme der Spulenwicklung 36. Das Deckelteil 42, das zylindrisch ausgebildet ist, umfasst die Wicklungsaufnahme 40 und ist mit den freien Enden 50 der ringförmigen Wände 46, 48 verbunden, so dass die Wicklungsaufnahme 40 und das Deckelteil 42 einen zylindrischen Raum 52 zur Aufnahme der Spulenwicklung 36 der Magnetspule 34 begrenzen.

Die Spulenwicklung 36 liegt an der Innenseite der Wicklungsaufnahme 40 und der Innenseite des Deckelteils 42 im Wesentlichen spaltfrei an.

Die Wicklungsaufnahme 40 umfasst wesentliche Teile des Magnetantriebes 12. An die Wicklungsaufnahme 40 der Umhausung 38 schließt sich in Richtung der Längsachse 20 der Betätigungsvorrichtung, also radial nach innen, die topfförmige, das Polrohr bildende Umfassungshülse 14 des Magnetantriebs 12 an.

An das Deckelteil 42 der Umhausung 38 schließt sich in Richtung der Umgebung ein äußeres Gehäuseteil 54 des Vorrichtungsgehäuses 10 an, das den Magnetantrieb 12, insbesondere die Umhausung 38, umfasst. Das äu-βere Gehäuseteil 54 weist ein zylindrisches Hauptgehäuseteil 56 auf. Von dem dem Ventilkörper 30 zugewandten Ende 58 des Hauptgehäuseteils 56 erstreckt sich ein ringscheibenförmiger Vorsprung 60 senkrecht radial nach innen weg. Das freie Ende 62 des Vorsprungs 60 als Boden eines insoweit gebildeten Aufnahmetopfes schließt im Wesentlichen in Radialrichtung mit der der Umfassungshülse 14 zugewandten Seite des Bodens 44 der Wicklungsaufnahme 40 ab, die mit ihrer dem Ventilkörper 30 zugewandten ringförmigen Wand 46 an dem Vorsprung 60 anliegt. Auf der dem Ventilkörper 30 abgewandten Seite der dem Ventilkörper 30 abgewandten ringförmigen Wand 48 der Wicklungsaufnahme 40 schließt sich an die Wicklungsaufnahme 40 und das Deckelteil 42 eine ringscheibenförmige Polplatte 64 an, die die Umfassungshülse 14 umfasst.

Das Vorrichtungsgehäuse 10 weist des Weiteren ein Abschlussstück 66 auf, das von der dem Ventilkörper 30 abgewandten Seite 68 des Hauptgehäuseteils 56 aus in das zylindrische Hauptgehäuseteil 56 eingebracht ist und mittels einer umfänglichen Umbördelung 70 in dem Hauptgehäuseteil 56 festgelegt ist. Das Abschlussstück 66 weist eine zentrale Durchgangsbohrung 72 auf.

Das Hauptgehäuseteil 56 ist derart beabstandet von dem Deckelteil 42 der Umhausung 38 angeordnet, dass zwischen der Innenwand des Hauptgehäuseteils 56 und der Außenwand des Deckelteils 42 ein umlaufender Ringspalt 74 gebildet ist, durch den ein weiterer zylindrischer Raum im Vorrichtungsgehäuse 10 gebildet ist. Der Ringspalt 74 ist an seinen freien, einander gegenüberliegenden axialen Enden einerseits von der Polplatte 64 und andererseits von dem Vorsprung 60 des äußeren Gehäuseteils 54 mitbegrenzt. Die Wicklungsaufnahme 40, das Deckelteil 42 und der Ringspalt 74 erstrecken sich zwischen der Polplatte 64 und dem Vorsprung 60 des äußeren Gehäuseteils 54, wobei die Wicklungsaufnahme 40 und das Deckelteil 42 konzentrisch zum Ringspalt 74 angeordnet sind.

Die Lagerstelle 18 des Magnetankers 22 umfasst den Magnetanker 22 ausgehend von seinem Mittenbereich in Richtung des von dem Ventilkörper 30 abgewandten Endbereichs 76 des Magnetankers 22 über eine Strecke, die in etwa, in Längsrichtung des Magnetankers 22 gesehen, der halben Höhe des Magnetankers 22 entspricht. Dadurch sind der dem Ventilkörper 30 abgewandte Endbereich 76 des Magnetankerumfangs und dessen von dem Ventilkörper 30 abgewandte Stirnseite 78 unter Bildung eines Hohlraums 80 sowie ein dem Ventilkörper 30 zugewandter Bereich 82 des Magnetankerumfangs unter Bildung eines weiteren Hohlraums 84 von der Umfassungshülse 14 beabstandet angeordnet.

Die Umfassungshülse 14, die Lagerstelle 18 und der Magnetanker 22 durchgreifen die Polplatte 64 an einer Durchtrittsstelle 86.

Weiterhin ist als Teil des Magnetantriebs 12 ein Polkern 88 vorgesehen, der eine zentral verlaufende Bohrung 90 aufweist, durch die sich das Betätigungselement 26 erstreckt. An seinem Außenumfang in seinem dem Magnetanker 22 zugewandten Endbereich 92 weist der Polkern 88 eine in Richtung des Magnetankers 22 konisch zulaufende, ringförmige Durchmesserverringerung 94 auf. Wie vorstehend dargelegt, bildet das Gehäuseteil 54 also eine Art Aufnahmetopf aus, dessen Boden 60 einen Durchgriffsraum für einen mittigen Durchgriff des Polkerns 88 aufweist, wobei der Boden 60 des Gehäuseteils 54 vorzugsweise stärker ausgebildet ist als die anschließende zylindrische Gehäusewandung des Gehäuseteils 54, um dergestalt eine gute Wärmeableitung über den Boden 60 in Richtung des blockartigen Ventilkörpers 30 zu ermöglichen.

Der Aufnahmetopf des Gehäuseteils 54 nimmt von seiner freien Stirnseite her, zumindest die Magnetspule 34 und nachfolgend die Polplatte 64 auf, die sich gegen ein Abschlussstück 66 abstützt, das mittels einer Bördelung 70 im Gehäuseteil 54 mit einer vorgebbaren Vorspannung gehalten ist. Ferner stützt sich die Magnetspule 34 mit ihrer Umhausung 38 außenumfangsseitig am Gehäuseteil 54 ab, innenumfangsseitig zumindest teilweise am Polkern 88 und mit ihren beiden einander gegenüberliegenden Stirnseiten zum einen am Boden 60 des Gehäuseteils 54 und zum anderen an der Polplatte 64. Es steht einer wirksamen Abstützung nicht entgegen, dass zwischen der Umhausung 38 und dem Polkern 88 die Wandung der Umfassungshülse 14 verläuft. Das Gehäuseteil 54 bildet umfangsseitig eine geschlossene Gehäusewandung, zu deren Längsachse in konzentrischer Anordnung zueinander zumindest die Magnetspule 34 nebst der Polplatte 64 und dem Polkern 88 angeordnet sind. Dergestalt ergibt sich ein kompakter Aufbau mit guter Wärmeübertragung zwischen den vorstehend genannten Komponenten.

Wie insbesondere die Figur zeigt, ist bei der Betätigungsvorrichtung vorgesehen, dass sowohl der Boden 60 des Gehäuseteils 54 als auch der Polkern 88 vorzugsweise bündig an ihren einander benachbarten Stirnseiten miteinander abschließend in direkter Anlage mit dem Ventilkörper 30 sind, der bevorzugt aus einem Werkstoff mit einem hohen Wärmeleitkoeffizienten, wie Aluminium, gebildet ist. Insbesondere ist der Ventilkörper 30 als Metallblock ausgebildet, der insoweit eine Art Wärmespeicher ausbildet. In Blickrichtung auf die Figur gesehen, endet die untere Seite des Bodens 60 mit der unteren Seite des Polkerns 88 in einer gemeinsamen Ebene querverlaufend zu der Längsachse des Gehäuseteils 54.

Der maximale Außendurchmesser des Magnetankers 22, der an seinem dem Ventilkörper 30 zugewandten Endbereich 82 unter Bildung einer ringförmigen Stufe 98 eine Durchmesserverringerung aufweist, ist kleiner bemessen als der minimale Außendurchmesser des Polkerns 88. Von der dem Magnetanker 22 zugewandten Stirnseite 100 des Polkerns 88 aus ist in den Polkern 88 eine koaxial zur Längsachse 20 der Betätigungsvorrichtung ausgebildete zylindrische Ausnehmung 102 eingebracht, an deren ringförmiger Seitenwand der dem Polkern 88 zugewandte, abgestufte Endbereich 82 des Magnetankerumfangs mit verringertem Durchmesser geführt ist. Dabei sind der Magnetanker 22 und der Polkern 88 derart ausgebildet, dass bei einer Verfahrbewegung des Magnetankers 22 in Richtung des Polkerns 88 die dem Polkern 88 zugewandte Stirnseite 106 des Magnetankers 22 mit dem Boden der zylindrischen Ausnehmung 102 in Anlage gelangt, wobei gleichzeitig die ringförmige Stufe 98 des Magnetankers 22 von der dem Magnetanker 22 zugewandten Stirnseite 100 des Polkerns 88 beabstandet verbleibt.

Das Betätigungselement 26 ist entlang einer weiteren Lagerstelle 110 geführt. Die weitere Lagerstelle 110 ist konzentrisch und stationär innerhalb der Bohrung 90 des Polkerns 88 aufgenommen und umfasst das Betätigungselement 26 in seinem Mittenbereich über eine Strecke, die in etwa, in Längsrichtung des Betätigungselements 26 gesehen, einem Viertel bis einem Fünftel der Länge des Betätigungselements 26 zwischen der dem Ventilkörper 30 zugewandten Stirnseite 106 des Magnetankers 22 und dem freien Ende 28 des Betätigungselements 26 entspricht. Dadurch ist das Betätigungselement 26 außerhalb der weiteren Lagerstelle 110 unter Bildung zweier weiterer Hohlräume 112 im Vorrichtungsgehäuse 10 beabstandet von dem Polkern 88 angeordnet.

Das freie Ende 114 der Umfassungshülse 14 endet in der Höhe der dem Ventilkörper 30 abgewandten Seite des Vorsprungs 60 des äußeren Gehäuseteils 54, an dem die Wicklungsaufnahme 40 für die Spulenwicklung 38 mit der Außenseite ihrer dem Ventilkörper 30 zugewandten ringförmigen Wand 46 abschließt.

Bei aus dem Stand der Technik bekannten Betätigungsvorrichtungen erwärmt sich der Magnetantrieb, insbesondere die Spulenwicklung, während des Betriebes bei Bestromen der Spulenwicklung, wodurch wärmebedingt sich das Leistungsvermögen der Betätigungsvorrichtung verringert. Die Wärme wird als Verlustleistung an die Umgebung der Spulenwicklung abgegeben. Die von der Spulenwicklung als Verlustleistung abgegebene Wärmeleistung ist nach dem ohmschen Gesetz abhängig von dem die Spulenwicklung durchfließenden elektrischen Strom und von dem Widerstandswert der Spulenwicklung, der wiederum von dem Material, dem Querschnitt und der Länge des Leiters der Spulenwicklung abhängt.

Sofern für den Aufbau der Betätigungsvorrichtung metallische Werkstoffe zum Einsatz kommen, verfügen diese regelmäßig über sehr hohe Wärmeleitkoeffizienten, so dass die entstehende Wärme rasch an die Umgebung der Betätigungsvorrichtung abgegeben wird, was die Verlustleistung reduzieren hilft. Neben der Tatsache, dass der Einsatz von metallischen Werkstoffen und deren Formgebung kostenintensiv ist, ist deren Einsatz im Rahmen der stromleitenden und stromführenden Komponenten wie der Stromzufuhr bzw. der Magnetspule mit ihren Spulenwicklungen wegen fehlender Isolierung nicht möglich. Elektrisch isolierende Komponenten, die die Spulenwicklung einfassen, sind daher regelmäßig aus Kunststoffmaterial gefertigt, das einen eher schlechten Wärmeleitkoeffizienten aufweist, wodurch die Wärme aus der Spulenwicklung nicht optimal abgeführt werden kann.

Erfindungsgemäß sind daher für eine verbesserte Wärmeabfuhr Teile der Betätigungsvorrichtung aus mindestens einem speziellen Kunststoffmaterial gebildet, das einen Wärmeleitkoeffizienten zwischen 0,25 und 1,25 W/m/K aufweist. So weist die Umhausung 38, in der die Spulenwicklung 36 aufgenommen ist, zumindest teilweise das jeweilige spezielle Kunststoffmaterial auf, nämlich sind die Wicklungsaufnahme 40 und/oder das Deckelteil 42 aus einem speziellen Kunststoffmaterial, insbesondere entweder aus dem gleichen oder aus voneinander verschiedenen speziellen Kunststoffmaterialien, gebildet.

Das jeweils spezielle Kunststoffmaterial ist aus, vorzugsweise spritzgießbarem, Polyamid 6-Werkstoff gebildet, der mit 5% bis 25%, vorzugsweise mit 10%, Glasfaseranteil verstärkt ist. Zudem ist das jeweils spezielle Kunststoffmaterial flammhemmend, insbesondere mit flammhemmenden Additiven versehen. Derartige flammhemmende Additive sind beispielsweise Magnesiumhydroxid und/oder Carbon.

Die Hohlräume 80, 84, 1 12 unterstützen die verbesserte Wärmeabfuhr nach innen hin mit.

Zudem sind die Polplatte 64, der Polkern 88, die Umfassungshülse 14 und das äußere Gehäuseteil 54 aus Metall-Werkstoffen mit guter Wärmeleitfähigkeit gebildet, wie 11SMn30 oder die Edelstähle 1.4301 und 1.4305. Auch kann der Ventilkörper 30 zumindest teilweise aus Metall, besonders bevorzugt aus Aluminium, mit einem hohen Wärmeleitkoeffizienten gebildet sein. Die Lagerstellen 18, 110 für den Magnetanker 22 und die Betätigungsstange 26 bestehen insbesondere aus Sinterbronze.

Durch eine derartige erfindungsgemäße Ausgestaltung der Betätigungsvorrichtung, und insbesondere des Ventilkörpers 30, ist eine besonders gute Abgabe der Wärme der Betätigungsvorrichtung an ihre Umgebung ermöglicht.

## Patentansprüche

1. Betätigungsvorrichtung, bestehend aus mindestens einem Magnetantrieb (12) mit Magnetspule (34), die in einem Gehäuse (10) aufgenommen im Betrieb eine die Leistung der Vorrichtung beeinträchtigende Wärme erzeugt, die über das Gehäuse (10) zumindest teilweise in die Umgebung als Verlustleistung abgeführt wird,
wobei für eine verbesserte Wärmeabfuhr Teile (40, 42) der Vorrichtung aus mindestens einem speziellen Kunststoffmaterial bestehen, das einen Wärmeleitkoeffizienten zwischen 0,25 und 1,25 W/m/K aufweist,
**dadurch gekennzeichnet,**
**dass** ein Aufnahmetopf eines Gehäuseteils (54) des Gehäuses (10) von seiner freien Stirnseite her zumindest die Magnetspule (34) und nachfolgend eine Polplatte (64) aufnimmt, die sich gegen ein Abschlussstück (66) abstützt, das mittels einer Bördelung (70) im Gehäuseteil (54) mit einer vorgebbaren Vorspannung gehalten ist.

2. Betätigungsvorrichtung nach Anspruch 1, **dadurch gekennzeichnet, dass** die Magnetspule (34) eine bestrombare Spulenwicklung (36) aufweist, die in einer Umhausung (38) aufgenommen ist, die zumindest teilweise das jeweilige spezielle Kunststoffmaterial aufweist.

3. Betätigungsvorrichtung nach Anspruch 2, **dadurch gekennzeichnet, dass** die Umhausung (38) für die Spulenwicklung (36) der Magnetspule (34) aus einer Wicklungsaufnahme (40) als ihrem einen Teil und einem die Wicklungsaufnahme (40) abschließenden Deckelteil (42) als ihrem weiteren Teil besteht, und dass zumindest eines der beiden Teile (40, 42) aus dem speziellen Kunststoffmaterial besteht, vorzugsweise beide Teile (40, 42) aus dem gleichen oder aus voneinander verschiedenen speziellen Kunststoffmaterialien bestehen.

4. Betätigungsvorrichtung nach Anspruch 3, **dadurch gekennzeichnet, dass** an die Wicklungsaufnahme (40) der Umhausung (38) in Richtung der Längsachse (20) der Betätigungsvorrichtung eine Umfassungshülse (14) desselben und an das Deckelteil (42) der Umhausung (38) in Richtung der Umgebung das äußere Gehäuseteil (54) des Vorrichtungsgehäuses (10) anschließt, und dass zwischen der Innenwand dieses äußeren Gehäuseteils (54) und der Außenwand des Deckelteils (42) ein umlaufender Ringspalt (74) aufgenommen ist.

5. Betätigungsvorrichtung nach Anspruch 4, **dadurch gekennzeichnet, dass** der Ringspalt (74) an seinen freien, einander gegenüberliegenden Enden einmal von der Polplatte (64) und einmal von dem äußeren Gehäuseteil (54) begrenzt ist, zwischen denen sich die Wicklungsaufnahme (40), konzentrisch zum Ringspalt (74) angeordnet, erstreckt.

6. Betätigungsvorrichtung nach einem der vorstehenden Ansprüche, **dadurch gekennzeichnet, dass** der Magnetantrieb (12) einen Magnetanker (22) aufweist, der längsverfahrbar entlang einer Lagerstelle (18) geführt ist, die stationär innerhalb der Umfassungshülse (14) aufgenommen ist, die die Polplatte (64) zusammen mit dem Magnetanker (22) an einer Durchtrittstelle (86) derselben durchgreift.

7. Betätigungsvorrichtung nach einem der vorstehenden Ansprüche, **dadurch gekennzeichnet, dass** als weiterer Bestandteil des Magnetantriebs (12) ein Polkern (88) vorgesehen ist, der von einem Betätigungselement (26) durchgriffen ist, das entlang einer weiteren, stationär im Polkern (88) angeordneten Lagerstelle (110) geführt ist.

8. Betätigungsvorrichtung nach Anspruch 7, **dadurch gekennzeichnet, dass** die Polplatte (64), der Polkern (88), die Umfassungshülse (14) und das äußere Gehäuseteil (54) aus Metall-Werkstoffen mit guter Wärmeleitfähigkeit bestehen.

9. Betätigungsvorrichtung nach Anspruch 7 oder 8, **dadurch gekennzeichnet, dass** ein Boden (60) des Aufnahmetopfes einen Durchgriffsraum für einen Durchgriff des Polkerns (88) aufweist und dass der Boden (60) des Gehäuseteils (54) vorzugsweise stärker ausgebildet ist als die anschließende zylindrische Gehäusewandung des Gehäuseteils (54).

10. Betätigungsvorrichtung nach einem der Ansprüche 7 bis 9, **dadurch gekennzeichnet, dass** sich die Magnetspule (34) mit ihrer Umhausung (38) außenumfangsseitig am Gehäuseteil (54), innenumfangsseitig zumindest teilweise am Polkern (88) und mit ihren beiden einander gegenüberliegenden Stirnseiten zum einen am Boden (60) des Gehäuseteils (54) und zum anderen an der Polplatte (64) abstützt.

11. Betätigungsvorrichtung nach einem der Ansprüche 7 bis 10, **dadurch gekennzeichnet, dass** das Gehäuseteil (54) die umfangsseitig geschlossene Gehäusewandung ausbildet, zu deren Längsachse in konzentrischer Anordnung zueinander zumindest die Magnetspule (34) nebst der Polplatte (64) und dem Polkern (88) angeordnet sind.

12. Betätigungsvorrichtung nach einem der Ansprüche 9 bis 11, **dadurch gekennzeichnet, dass** sowohl der Boden (60) des Gehäuseteils (54) als auch der Polkern (88), vorzugsweise bündig an ihren einander benachbarten Stirnseiten miteinander abschließend, in direkter Anlage mit dem Ventilkörper (30) sind, der bevorzugt aus einem Werkstoff mit einem hohen Wärmeleitkoeffizienten, wie Aluminium, gebildet ist.

13. Betätigungsvorrichtung nach einem der vorstehenden Ansprüche, **dadurch gekennzeichnet, dass** das jeweils spezielle Kunststoffmaterial aus einem, vorzugsweise spritzgießbarem, Polyamid 6-Werkstoff besteht, der mit 5 bis 25 %, vorzugsweise mit 10 %, Glasfaseranteil verstärkt ist.

14. Betätigungsvorrichtung nach einem der vorstehenden Ansprüche, **dadurch gekennzeichnet, dass** das jeweils spezielle Kunststoffmaterial flammhemmend ist, insbesondere mit flammhemmenden Additiven versehen ist, wie Magnesiumhydroxid und/oder Carbon.

## Claims

1. Actuating device, consisting of at least one solenoid drive (12) having a solenoid coil (34) which, accommodated in a housing (10), generates heat during operation which impairs the performance of the device and which is dissipated at least partially into the surroundings as power loss via the housing (10),
wherein, for improved heat dissipation, parts (40, 42) of the device consist of at least one special plastic material which has a coefficient of thermal conductivity between 0.25 and 1.25 W/m/K,
**characterised in that**
a receiving cup of a housing part (54) of the housing (10) accommodates at least the solenoid coil (34) and subsequently a pole plate (64) from its free end face, the pole plate resting against an end piece (66) which is held in the housing part (54) with a predefinable pretension by means of a flange (70).

2. Actuating device according to claim 1, **characterised in that** the solenoid coil (34) has an energisable coil winding (36) which is accommodated in an enclosure (38) which at least partially comprises the relative special plastic material.

3. Actuating device according to claim 2, **characterised in that** the enclosure (38) for the coil winding (36) of the solenoid coil (34) consists of a winding holder (40) as its one part and a cover part (42) closing the winding holder (40) as its further part, and **in that** at least one of the two parts (40, 42) consists of the special plastic material, preferably both parts (40, 42) consist of the same special plastic material or special plastic materials that are different from each other.

4. Actuating device according to claim 3, **characterised in that**, adjoining the winding holder (40) of the enclosure (38) in the direction of the longitudinal axis (20) of the actuating device, there is a surrounding sleeve (14) thereof and the outer housing part (54) of the device housing (10) adjoins the cover part (42) of the enclosure (38) towards the surroundings, and **in that** a circumferential annular gap (74) is accommodated between the inner wall of this outer housing part (54) and the outer wall of the cover part (42).

5. Actuating device according to claim 4, **characterised in that** the annular gap (74) is bounded at its free, mutually opposing ends by the pole plate (64) on the one hand and by the outer housing part (54) on the other hand, between which the winding holder (40), arranged concentric with the annular gap (74), extends.

6. Actuating device according to one of the preceding claims, **characterised in that** the solenoid drive (12) has a solenoid armature (22) which is guided so as to be longitudinally displaceable along a bearing surface (18), which bearing surface is accommodated in a stationary manner within the surrounding sleeve (14), which sleeve engages through the pole plate (64) together with the solenoid armature (22) at a passage point (86) thereof.

7. Actuating device according to one of the preceding claims, **characterised in that** a pole core (88) is provided as a further component of the solenoid drive (12), through which pole core an actuating element (26) engages, which is guided along a further bearing surface (110) arranged in a stationary manner in the pole core (88).

8. Actuating device according to claim 7, **characterised in that** the pole plate (64), the pole core (88), the surrounding sleeve (14) and the outer housing part (54) consist of metal materials with good thermal conductivity.

9. Actuating device according to claim 7 or 8, **characterised in that** a base (60) of the receiving cup has a passage space for the pole core (88) to pass through and **in that** the base (60) of the housing part (54) is preferably configured to be thicker than the adjoining cylindrical housing wall of the housing part (54).

10. Actuating device according to one of claims 7 to 9, **characterised in that** the solenoid coil (34) with its enclosure (38) is supported on the housing part (54) on the outer circumference, at least partially on the pole core (88) on the inner circumference and on the base (60) of the housing part (54) with its two mutually opposing end faces, on the one hand, and on the pole plate (64), on the other hand.

11. Actuating device according to one of claims 7 to 10, **characterised in that** the housing part (54) forms the circumferentially closed housing wall, at least the solenoid coil (34) together with the pole plate (64) and the pole core (88) being arranged concentric with each other with respect to the longitudinal axis of said housing wall.

12. Actuating device according to one of claims 9 to 11, **characterised in that** both the base (60) of the housing part (54) and the pole core (88), preferably being flush with each other at their adjacent end faces, are in direct contact with the valve body (30), which is preferably formed of a material with a high coefficient of thermal conductivity, such as aluminium.

13. Actuating device according to one of the preceding claims, **characterised in that** in each case the special plastic material consists of a polyamide 6 material which can preferably be injection moulded and is reinforced with 5 to 25%, preferably with 10%, glass fibre content.

14. Actuating device according to one of the preceding claims, **characterised in that** in each case the special plastic material is flame-retardant, in particular is provided with flame-retardant additives, such as magnesium hydroxide and/or carbon.

## Revendications

1. Dispositif d'actionnement constitué d'au moins un entraînement (12) magnétique ayant une bobine (34) d'électroaimant, qui, logée dans une enveloppe (10), produit en fonctionnement de la chaleur, qui affecte la puissance du dispositif et qui est évacuée comme puissance perdue au moins en partie à l'atmosphère environnante par l'enveloppe (10),
dans lequel, pour obtenir une évacuation meilleure de la chaleur, des parties (40, 42) du dispositif sont en au moins une matière plastique spéciale, qui a un coefficient de conductibilité de la chaleur compris entre 0,25 et 1,25 W/m/K,
**caractérisé**
**en ce qu'**un pot de réception d'une partie (54) de l'enveloppe (10) reçoit, à partir de son côté frontal libre, au moins la bobine (34) d'électroaimant et ensuite une plaque (64) polaire, qui s'appuie sur une pièce (66) de fermeture, qui est maintenue avec une précontrainte pouvant être donnée à l'avance, dans la partie (54) de l'enveloppe, au moyen d'un bordage (70).

2. Dispositif d'actionnement suivant la revendication 1, **caractérisé en ce que** la bobine (34) d'électroaimant a un enroulement (36) de bobine, qui peut être alimenté en courant et qui est reçu dans un boîtier (38), qui comporte au moins en partie la matière plastique spéciale respective.

3. Dispositif d'actionnement suivant la revendication 2, **caractérisé en ce que** le boîtier (38) de l'enroulement (36) de la bobine (34) d'électroaimant est constitué d'un logement (40) d'enroulement comme une de ses parties et d'une partie (42) de couvercle fermant le logement (40) d'enroulement comme son autre partie, et **en ce qu'**au moins l'une des deux parties (40, 42) est en la matière plastique spéciale, de préférence les deux parties (40, 42) sont en la même matière plastique spéciale ou sont en deux matières plastiques spéciales différentes l'une de l'autre.

4. Dispositif d'actionnement suivant la revendication 3, **caractérisé en ce qu'**au logement (40) de l'enroulement du boîtier (38) se raccorde, dans la direction de l'axe (20) longitudinal du dispositif d'actionnement, un manchon (14) d'enceinte et à la partie (42) de couvercle du boîtier (38), dans la direction de l'atmosphère ambiante, la partie (54) extérieure de l'enveloppe (10) du dispositif, et **en ce que**, entre la paroi intérieure de cette partie (54) extérieure de l'enveloppe et la paroi extérieure de la partie (42) de couvercle, il y a un intervalle (74) annulaire faisant le tour.

5. Dispositif d'actionnement suivant la revendication 4, **caractérisé en ce que** l'intervalle (74) annulaire est délimité, à ses extrémités libres opposées l'une à l'autre, d'une part par la plaque (64) polaire et d'autre part par la partie (54) extérieure de l'enveloppe, entre lesquelles s'étend le logement (40) de l'enroulement disposé concentriquement à l'intervalle (74) annulaire.

6. Dispositif d'actionnement suivant l'une des revendications précédentes, **caractérisé en ce que** l'entraînement (12) magnétique a un induit (22) magnétique, qui est guidée avec possibilité de se déplacer longitudinalement le long d'un emplacement (18) de palier, qui est reçu de manière fixe dans le manchon (14) d'enceinte, qui traverse la plaque (64) polaire ensemble avec l'induit (22) magnétique en un point (86) de traversée.

7. Dispositif d'actionnement suivant l'une des revendications précédentes, **caractérisé en ce que**, comme autre constituant de l'entraînement (12) magnétique est prévu un noyau (88) polaire, qui est traversé par un élément (26) d'actionnement, lequel est guidé le long d'un autre emplacement (110) de palier monté fixe dans le noyau (88) polaire.

8. Dispositif d'actionnement suivant la revendication 7, **caractérisé en ce que** la plaque (64) polaire, le noyau (88) polaire, le manchon (14) d'enceinte et la partie (54) extérieure de l'enveloppe sont en un matériau métallique ayant une bonne conductibilité de la chaleur.

9. Dispositif d'actionnement suivant la revendication 7 ou 8, **caractérisé en ce qu'**un fond (60) du pot de réception a un espace de passage pour le passage du noyau (88) polaire, et **en ce que** le fond (60) de la partie (54) de l'enveloppe est d'une constitution de préférence plus robuste que la paroi cylindrique de la partie (54) de l'enveloppe.

10. Dispositif d'actionnement suivant l'une des revendications 7 à 9, **caractérisé en ce que** la bobine (34) d'électroaimant s'appuie, par son boîtier (38) du côté du pourtour extérieur, sur la partie (54) de l'enveloppe, du côté du pourtour intérieur au moins en partie sur le noyau (88) polaire et par ses deux côtés frontaux opposés l'un à l'autre, d'une part sur le fond (60) de la partie (54) de l'enveloppe et d'autre part sur la plaque (64) polaire.

11. Dispositif d'actionnement suivant l'une des revendications 7 à 10, **caractérisé en ce que** la partie (54) de l'enveloppe constitue la paroi de l'enveloppe fermée du côté du pourtour, par rapport à l'axe longitudinal de laquelle sont disposés suivant un agencement concentrique les uns par rapport aux autres au moins la bobine (34) d'électroaimant, outre la plaque (64) polaire et le noyau (88) polaire.

12. Dispositif d'actionnement suivant l'une des revendications 9 à 11, **caractérisé en ce qu'**à la fois le fond (60) de la partie (54) de l'enveloppe et le noyau (88) polaire sont, de préférence à affleurement l'un de l'autre sur leurs côtés frontaux voisins l'un de l'autre, en contact direct avec le corps (30) de vanne, qui est, de préférence en un matériau ayant un grand coefficient de conduction de la chaleur, comme l'aluminium.

13. Dispositif d'actionnement suivant l'une des revendications précédentes, **caractérisé en ce que** la matière plastique spéciale respective est en un matériau en polyamide 6, de préférence moulable par injection, qui est renforcée par une proportion de 5 à 25 %, de préférence de 10 % de fibre de verre.

14. Dispositif d'actionnement suivant l'une des revendications précédentes, **caractérisé en ce que** la matière plastique spéciale respective est ignifuge, en étant pourvue en particulier d'additifs ignifuges, comme de l'hydroxyde de magnésium et/ou du carbone.
